(19) Europäisches Patentamt
European Patent Office
Office européen des brevets

(11) **EP 1 376 194 B1**

(12) **EUROPEAN PATENT SPECIFICATION**

(45) Date of publication and mention
of the grant of the patent:
**21.05.2008 Bulletin 2008/21**

(21) Application number: **03014607.0**

(22) Date of filing: **26.06.2003**

(51) Int Cl.:
*G02B 26/12* (2006.01)          *G02B 26/10* (2006.01)
*G02B 5/04* (2006.01)          *G02B 5/18* (2006.01)
*B41J 2/45* (2006.01)          *H04N 1/04* (2006.01)

(54) **Refracting element array, diffracting element array and exposure apparatus**

Anordnung refraktiver optischer Elemente, Anordnung diffraktiver optischer Elemente und Belichtungsvorrichtung

Matrice d'éléments réfractifs, matrice d' éléments diffractifs et appareil d'exposition

(84) Designated Contracting States:
**DE FR GB**

(30) Priority: **27.06.2002 JP 2002188295**

(43) Date of publication of application:
**02.01.2004 Bulletin 2004/01**

(73) Proprietor: **FUJIFILM Corporation**
**Minato-ku**
**Tokyo (JP)**

(72) Inventor: **Miyagawa, Ichirou**
**Ashigarakami-gun,**
**Kanagawa (JP)**

(74) Representative: **Klunker . Schmitt-Nilson . Hirsch**
**Winzererstrasse 106**
**80797 München (DE)**

(56) References cited:
**WO-A-00/41009**          **DE-A- 10 012 480**
**DE-A- 19 818 531**          **US-A- 5 457 573**
**US-A- 5 570 189**          **US-A- 5 760 932**
**US-A1- 2001 050 815**

• **PATENT ABSTRACTS OF JAPAN vol. 2000, no. 13, 5 February 2001 (2001-02-05) -& JP 2000 284205 A (FUJI PHOTO FILM CO LTD), 13 October 2000 (2000-10-13)**

## Description

BACKGROUND OF THE INVENTION

Field of the Invention

The present invention relates to an exposure apparatus according to the preamble of claim 1. An exposure apparatus of this type is known from Patent Abstracts of Japan vol. 2000, no. 13, 5 February 2001 (2001-02-05)- & JP 2000 284205 A (Fuji Photo Film Co. Ltd), 13 October (2000-10-13). It particularly relates to an array refracting element and an array diffracting element used for switching resolution and an exposure apparatus capable of switching the resolution in an exposure recording apparatus in which a light beam emitted from a light source scans a recording medium to form an image.

Description of the Related Art (JP 2000 284205 A)

Conventionally, an exposure recording apparatus, which records a two dimensional image on a photosensitive material (recording medium) by rotating a drum, on a peripheral surface of which the recording material is mounted, in a main scanning direction, and scanning a laser beam, which is modulated in accordance with image data of an image to be recorded on the photosensitive material, in a sub-scanning direction, which is orthogonal to the main scanning direction.

In exposure recording apparatus of this type, in order to lower resolution and record the image, the following methods are employed: a method, in which a spot diameter of the laser beam on a surface of the photosensitive material is enlarged and a recording pitch with respect to the sub-scanning direction is increased, and a method, in which of pixels formed from identical image data, only those with lowered resolution are repeatedly recorded, without changing the recording pitch and size of the spot diameter. On the other hand, when recording an image with increased resolution, methods, which are the reverse of those mentioned above, are employed.

However, since it is necessary to drive a lens of an optical system and the like by using a driving mechanism in order to enlarge or reduce the spot diameter of the laser beam in the above-described way, there has been a problem in that size and cost of the apparatus increase. When the resolution is reduced by repeatedly recording a portion, the resolution of which has been reduced, of the pixel formed by the same image data, since a recording pitch is constant with respect to the sub-scanning direction, there has been the problem in that recording speed can not be improved.

In order to solve these problems, in a technique described in Japanese Patent Application Laid-Open (JP-A) No. 2000-284206 (which is similar to the above mentioned JP 2000 284205 A) by the applicant of the present invention, a light beam emitted from a light source is divided into multiple light beams, and a multiple-condensing-points generating component which generates, in a sub-scanning direction of the recording medium, multiple condensing points condensed by a condensing optical system onto a recording medium and a sub-scanning control component which controls a recording pitch of the sub-scanning direction according to resolution are provided. When the light beams emitted from the light source are condensed on the recording medium through the condensing optical system to record an image, by controlling the number of condensing points, which are divided and generated in the sub-scanning direction by the multiple-condensing-points generating components, a size of a beam spot is adjusted and a recording pitch of the beam spot is adjusted in the sub-scanning direction according to the resolution of the recording image and thus, an image can be efficiently recorded.

In the above-described technique, a deflecting optical element made of a uniaxial crystal or a deviation prism has been applied as the multiple-condensing-points generating component.

However, when the deflecting optical element made of the uniaxial crystal is applied as the multiple-condensing-points generating component in the technique described in the above-described JP-A No. 2000-284206, cost increases because the uniaxial crystal is expensive.

Further, when the deviation prism is applied to the multiple-condensing-points generating component in the technique described in JP-A No. 2000-284206, image quality of the recording image may deteriorated.

SUMMARY OF THE INVENTION

In view of the foregoing, it is the object of the present invention to provide an exposure apparatus which can improve the image quality of a recording image at low cost.

In order to achieve the above-described object, an exposure apparatus comprises the features of claim 1. The two refracting members can be also formed such that one of the two refracting members does not change a traveling direction of the incident light beam.

By configuring the array refracting element in the above-described way, the light beam divided into each two beams is formed by the light beams of the number of array pairs, respectively, when the array refracting element is used for the exposure recording apparatus. Accordingly, since one condensing spot is formed by the condensing spots of the number of array pairs, in the case where the divided light beams are superimposed in each of the number of array pairs at the focal point by the condenser lens while the condensing spot is shifted, when an outgoing side of the laser beam is viewed from the focal point and when an incident side of the laser beam is viewed from the focal point with respect to an array direction, blurring of each laser beam becomes symmetrical in a direction of an optical axis, as a result, the image quality of the recording image can be improved in the laser recording apparatus.

Because the array refracting element of the invention can be made of any material which can divide the light beam into two beams, it is not always necessary to use the uniaxial crystal required when the light beam is separated according to a deflecting direction, so that the array refracting element can be configured at low cost. The array refracting element of the invention can be also integrally formed by, for example, cutting or etching a plate-shaped member, and the array refracting element of the invention can be also made by bonding an array refracting material in the shape of the array with an optical bonding agent.

The array refracting element is configured to become the shape in which two refracting members having a unit surface shape dividing one laser beam into two beams in such a manner that each of the incident laser beams is ejected toward different positions from each other are arranged in pair units in the shape of the array in the direction orthogonal to the divided direction of the laser beam, so that the image quality of the recording image can be improved at low cost when the array refracting element is used for the exposure recording apparatus.

In the exposure recording apparatus, in order to superimpose the light beams, which have been divided into two beams, respectively, by each unit surface shape of the array refracting element as described above, in each of the number of array pairs at the focal point by the condenser lens, when the array refracting element is placed at a region where the light beams to be divided (exposure light) become substantially parallel, it is necessary that the light beam after the division eject with different angular orientations from each other, and when the array refracting element is placed at the region where the light beam diverges or converges, it is necessary that the optical axis of the light beam after the division is parallel to the optical axis of the light beam before the division.

Therefore, it is preferable that the unit surface shape is formed in a shape in which the one incident light beam is divided into light beams which have different angular orientation from each other and ejected, or a shape in which the one incident light beam is divided and ejected such that the optical axis of the divided light beam is parallel to the optical axis of the light beam. Consequently, the array refracting element of the invention can be formed so as to correspond to a region where the light beam to be divided is substantially paralleled or a region where the light beam to be divided diverges or converges.

The array diffracting element of a second aspect of the invention is an array diffracting element comprising two refracting members, at least one of which is formed as a diffracting member, having a unit surface shape for dividing one incident light beam into two light beams, wherein the array refracting members are arranged in a pair unit in an array shape in a direction orthogonal to a light beam dividing direction. As long as the two refracting members are able to have one incident light beam eject towards two different positions the two refracting members do not both have to refract the incident light. One of the refracting members also can be made to be a member that does not change a travelling direction of the light beam.

By structuring the array diffracting element in this way, when the array diffracting member is used by a exposure recording apparatus, each of the light beams which are divided into two, is composed of a light beam from each of the respective array pairs. Accordingly, since one condensed spot is made from a number of condensed light beams equal to the number of array pairs, in cases in which the divided light beams are condensed at the focal point by the condenser lens and the condensed spots are superimposed by staggering the number of array pairs number of condensed spots, when the ejecting side of the light beam is seen from the focal pint and when the incident side of the light beam is seen from the condensing direction with respect to the array direction, blurring of the respective light beams with respect to the light axis direction becomes substantially symmetrical. As a result, image quality of a recorded image in an exposure recording apparatus can be improved.

Moreover, the array diffracting element of the present invention can comprise any material, so long as the material can divide a laser beam in two. Therefore, use of the uniaxial crystal, which is essential when the light beam is separated in accordance with the polarizing direction, is not required, and the array diffracting element can be made at low cost. The array diffracting element of the present invention can also be integrally formed by, for example, cutting or etching a plate-shaped member. The array diffracting element of the present invention can also be made by bonding an array refracting material in an array shape with an optical bonding agent.

Thus, according to the array diffracting element of the second aspect of the present invention, the array diffracting element is configured to be an array diffracting element comprising two refracting members, at least one of which is formed as a diffracting member, having a unit surface shape for dividing one incident light beam into two light beams, wherein the array refracting members are arranged in a pair unit in an array shape in a direction orthogonal to a light beam dividing direction, so that the image quality of the recorded image can be improved at low cost when the array diffracting element is used for the exposure recording apparatus.

In case in which the array diffracting element of the present invention is used in the exposure recording apparatus, in order to superimpose the light beams, which have each been divided into two beams, by each unit surface shape of the array diffracting element as described above, in each of the number of array pairs at the focal point by the condenser lens, when the array diffracting element is disposed at a region where the light beams to be divided (exposure light) become substantially parallel, the light beams which have divided, must eject with different angular orientations from each other.

Thus, in the array diffracting element of the second aspect of the present invention, the unit surface shape is preferably formed in a shape, which divides the one incident light beam and causes the divided beams to eject with angular orientations different from each other. Thus, the array diffracting beam of the present invention can be formed so as to correspond to the position, at which the light beam to be divided, becomes parallel.

The invention provides an exposure apparatus, which forms an image on a recording medium by scanning exposure. The exposure apparatus includes a light source from which a light beam emitted in a broad area ejects in at least main-scanning direction, a condensing optical system which condenses the light beam emitted from the light source on the recording medium, and the array refracting element of the first aspect or the array diffracting element which is placed between the light source and the recording medium so that a direction, in which the two refracting elements are aligned in an array shape, is substantially parallel to the broad area direction of the light beam emitted from the light source.

According to the exposure apparatus of the invention, when the light beam ejecting from the light source from which the light beam emitted in the broad area ejects in at least a main-scanning direction is condensed on the recording medium by the condensing optical system, the light beam is divided in the broad area direction of the light beam, i.e. the sub-scanning direction, by the array refracting element or the array diffracting element of the present invention. The above-described light source includes various kinds of laser diodes.

According to the exposure apparatus of the invention, since the array refracting element or the array diffracting element of the present invention is placed between the light source and the recording medium so that the direction, in which the two refracting elements are aligned in an array shape, is substantially parallel to the broad area direction of the light beam, at the focus point as well, spot diameter is larger than when emitted from the light source, and differences among the light spots having strong intensities and diffracted by the respective pairs of unit surfaces, which were formed into an array, can be made relatively small. Accordingly, the light spots generated by diffraction can also be used. Moreover, because the diffracted light exposes in a state of being shifted in the main scanning direction images having sharp-lines can be formed, and as a result, the image quality of the recording image can be improved. Since the array refracting element and array diffracting element of the invention can be formed at low cost compared with the case where the uniaxial crystal is used, the apparatus can be configured at low cost.

The light beam emitted from the light source is temporarily superimposed at a position where a far field pattern is formed by the condensing optical system.

Therefore, it is preferable that the array refracting element or array diffracting element of the invention is placed at the position where the far field pattern of the light beam emitted from the light source is formed. Consequently, the array refracting element and array diffracting element of the invention can be similarly worked for the light beam emitted from the light source.

On the other hand, the exposure apparatus of the invention further includes an inputting component which inputs resolution information showing resolution of an image formed on the recording medium by the scanning exposure, and a moving component in which the array refracting element or array diffracting element is removed from the optical axis of the light beam emitted from the light source when the resolution shown by the resolution information is a predetermined first resolution, and the array refracting element or array diffracting element is moved so as to be placed on the optical axis when the resolution shown by the resolution information is a second resolution which is lower than the first resolution.

According to the exposure apparatus, the resolution information showing the resolution of the image formed on the recording medium by the scanning exposure is inputted by the inputting component, when the resolution shown by the resolution information is the predetermined first resolution, the array refracting element or array diffracting element is removed from the optical axis of the light beam emitted from the light source with the moving component, and when the resolution shown by the resolution information is the second resolution which is lower than the first resolution, the array refracting element or array diffracting element is moved by the moving component so as to be placed on the optical axis.

According to the exposure apparatus, the resolution information showing the resolution of the image formed on the recording medium by the scanning exposure is inputted, when the resolution shown by the resolution information is the predetermined first resolution, the array refracting element or array diffracting element is removed from the optical axis of the light beam emitted from the light source, and when the resolution shown by the resolution information is the second resolution which is lower than the first resolution, the array refracting element or array diffracting element is moved so as to be placed on the optical axis, so that the resolution can be easily changed only by inputting the resolution information during recording the image on the recording medium.

For a preferable aspect of the exposure apparatus of the third aspect, it can be cited that the multiple light sources are arranged along the divided direction of the light beam. When the multiple light sources of the invention are arranged along the divided direction and the light beam emitted from each light source is divided by each array refracting element or array diffracting element to be guided to the recording medium, the image quality of the recording image can be improved, and the image can be recorded at high speed.

As described above in detail, the array refracting element and array diffracting element according to the invention is configured to become the shape in which two refracting members having a unit surface shape dividing one laser beam into two beams in such a manner that each of the incident laser beams ejects toward different positions from each other are arranged in pair units in the shape of the array in the direction orthogonal to the divided direction of the laser beam, so that an effect, in which the image quality of the recording image can be improved at low cost when the array refracting element is used for the exposure recording apparatus, is obtained.

Further, according to the exposure apparatus of the invention, since the array refracting element or array diffracting element of the present invention is placed between the light source and the recording medium so that the array direction is substantially parallel to the broad area direction of the light beam, the blurring of the light beam can be symmetric in the direction of the optical axis at the position which is shifted frontward and backward from the focal point of the light beam in the direction of the optical axis (depth direction), and as a result, the effect, in which the image quality of the recording image can be improved, is obtained. Since the array refracting element and array diffracting element of the present invention can be formed at low cost compared with the case where the uniaxial crystal is used, so that the effect, in which the apparatus can be configured at low cost, is obtained.

BRIEF DESCRIPTION OF THE DRAWINGS

Fig. 1 is a schematic block diagram of a laser recording apparatus according to a first embodiment of the present invention.

Fig. 2 is a schematic block diagram of a fiber array portion according to embodiments of the present invention.

Fig. 3 is a schematic block diagram showing a configuration of an array refracting element according to the first embodiment of the present invention.

Fig. 4 is a block diagram showing a configuration of a control system of the laser recording apparatus according to the embodiments of the present invention.

Fig. 5 is a flow chart showing a flow of processing in the case where image recording is performed according to resolution.

Figs. 6A and 6B are schematic diagrams showing a state of a beam spot on a recording film, which is formed by the laser recording apparatus according to the embodiments of the present invention.

Figs. 7A and 7B are schematic diagrams for illustrating the configuration of the array refracting element and operation of the laser recording apparatus according to the first embodiment of the present invention.

Figs. 8A to 8D are plan views showing shape examples of two refracting portions defining a shape of the array refracting element or the array diffracting element of the invention.

Figs. 9A to 9H are sectional views for illustrating a method of manufacturing the array diffracting element of the invention by adopting a binary optic.

Fig. 10 is a schematic block diagram of a laser recording apparatus according to a second embodiment of the present invention.

Fig. 11A is a schematic diagram for illustrating the working of the laser recording apparatus according to the second embodiment of the invention.

Figs. 11B and 11C are schematic diagrams for illustrating the configuration and the operation of the array refracting element according to the second embodiment of the present invention.

Figs. 12A and 12B are explanatory views for illustrating effect of the array refracting element according to each embodiment of the present invention.

Fig. 13A and 13B are graphs showing status examples of an intensity distribution of a laser beam at a condensing point; and

Fig. 14 is a block diagram for illustrating a prior art.

DETAILED DESCRIPTION OF THE INVENTION

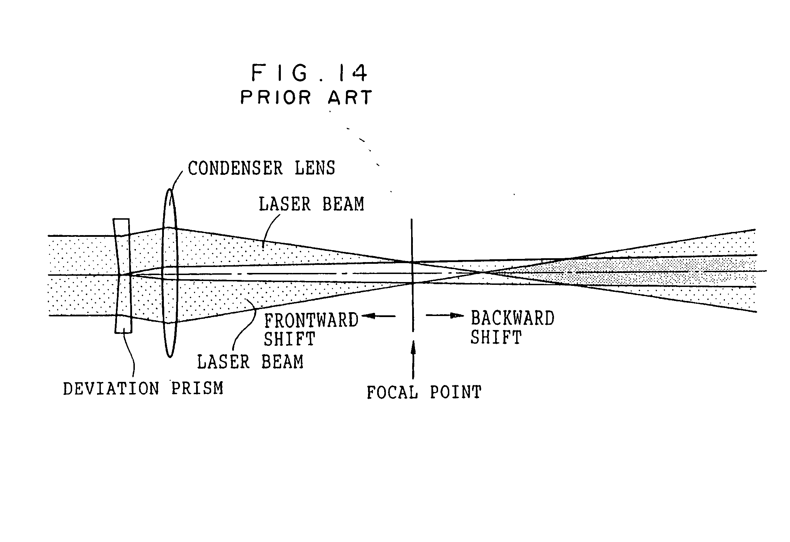

First of all, in order to compare with the present invention of the subject application, Fig. 14 shows an example in the case where a deviation prism is applied as a multiple-condensing-points generating component. As shown in Fig. 14, the blurring of a laser beam becomes asymmetrical at a position where the laser beam is shifted in a frontward or backward direction from a focal point of the laser beam divided by the deviation prism and condensed by a condenser lens.

This phenomenon is caused by the following reason. That is, because each of the light beams divided by the deviation prism is condensed at a different position in a divided direction of each focal point by the condenser lens, for example the divided light beams are being separated from each other when an incident side of the light beam is viewed from the focal point, and the divided light beams are close to each other, intersected, and then separated when an ejecting side of the light beam is viewed from the focal point. The phenomenon lessens tolerance of arranged position of the recording medium in the depth direction, sometimes there is a case where the image quality of the recording image to the recording medium is deteriorated even if the shift in the depth direction of the arranged position is slight.

Referring to accompanying drawings, preferred embodiments of the invention will be described in detail below. A case, in which the array refracting element and the exposure apparatus of the invention are applied to the laser recording apparatus, is explained in the following description.

[First Embodiment]

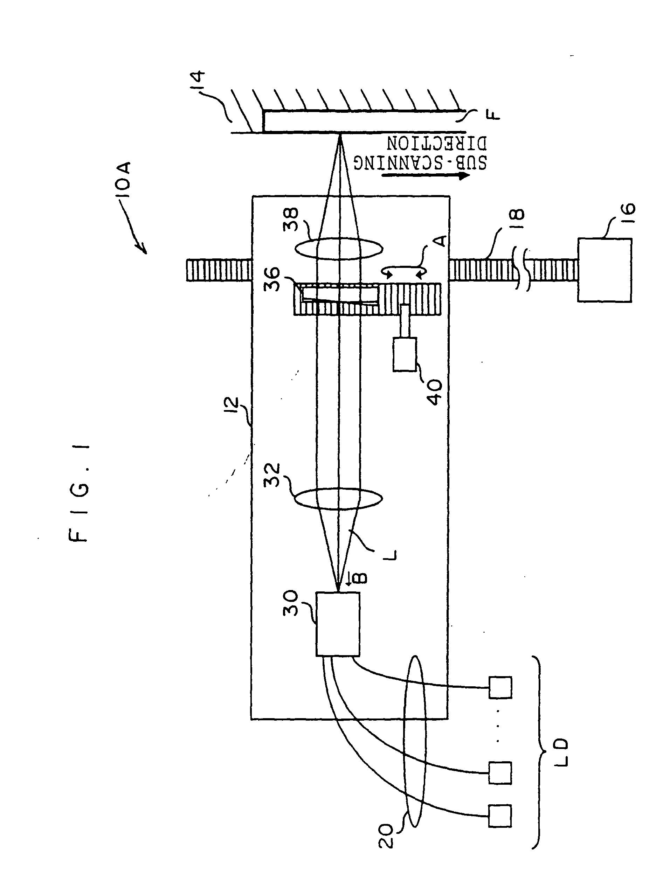

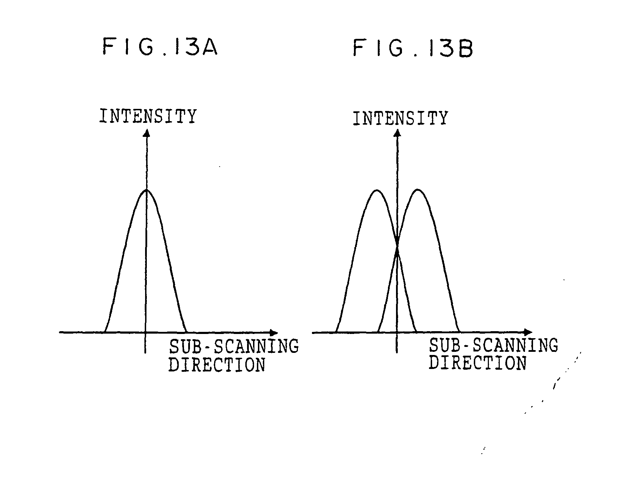

First the configuration of a laser recording apparatus 10A according to a first embodiment will be described referring to Fig. 1. As shown in Fig. 1, the laser recording apparatus 10A is formed to include an odd-number of and three or more (seven laser diodes in the embodiments) laser diodes LD which each emit a laser beam an exposure head 12 which condenses each laser beam emitted from each laser diode LD, a drum 14 to which a recording film F recording the image is mounted and which is rotationally driven so as to move the recording film F in the main scanning direction, and a sub-scanning motor 16 which moves the exposure head 12 arranged on a ball screw 18 in the sub-scanning direction orthogonal to the main scanning direction by rotationally driving the ball screw 18. In the embodiment, an optical fiber coupled laser diode having an intensity distribution shown in Fig. 13A is applied as the laser diode LD.

The exposure head 12 includes a transverse multi-mode fiber array portion 30 in which each laser beam guided from the odd-numbered laser diodes LD is brought together to be emitted, and the laser beam emitted from each laser diode LD is guided to the fiber array portion 30 by each transverse multi-mode optical fiber 20. In the embodiment, the multi-mode optical fiber having a relatively large core diameter is used as the optical fiber 20 in order that the laser beam is set to high output.

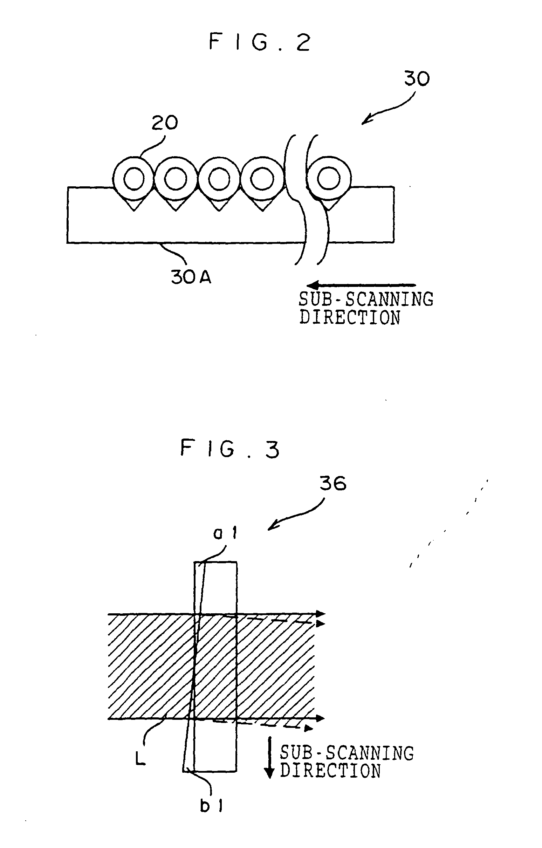

Fig. 2 shows a configuration of the fiber array portion 30 viewed in the direction of an arrow B in Fig. 1. The fiber array portion 30 according to the embodiment is equipped with a support 30A in which V-shaped grooves of the same number as that of the laser diodes LD on an upper surface are adjacent to each other along the sub-scanning direction, and one optical fiber 20 is fitted to each V-shaped groove. Accordingly, multiple laser beams L emitted from each laser diode LD are emitted from the fiber array portion 30 at a predetermined interval along the sub-scanning direction.

Each laser diode LD emitting the light in a broad band area in one direction may be used as the light source. In this case, the broad band area direction of the laser beam L emitted from each laser diode LD is arranged so as to correspond to the main-scanning direction.

A collimator lens 32, an array refracting element 36, and a condenser lens 38 are arranged in order from the side of the fiber array portion 30 in the exposure head 12.

Further, the exposure head 12 includes an element moving motor 40 which can insert and remove the array refracting element 36 on an optical path of the laser beam L by rotating a rotating axis in the direction of an arrow A in Fig. 1.

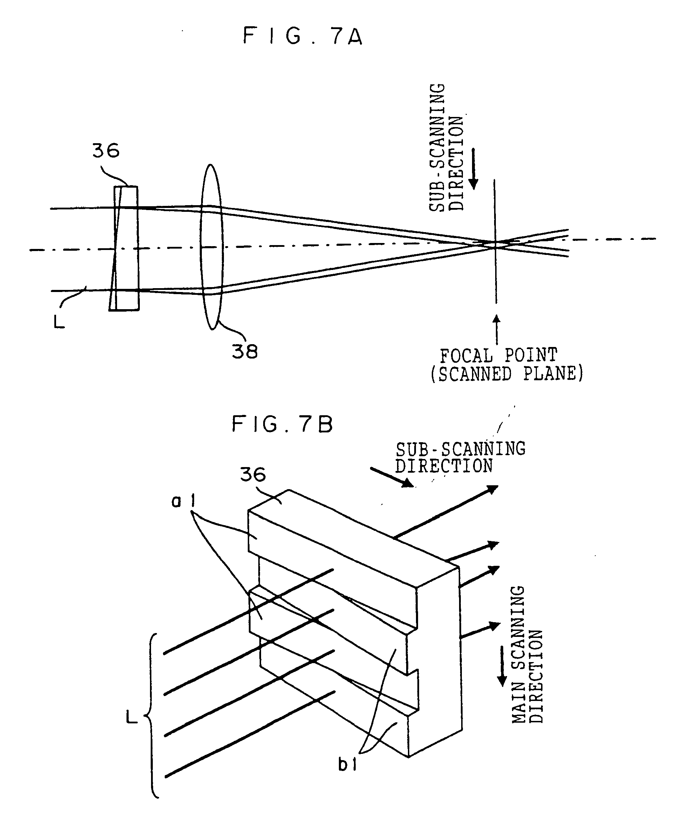

As shown in Figs. 3 and 7B, the array refracting element 36 according to the embodiment is formed such that each two pairs of refracting members a1 and refracting members b1, which have a unit surface shape dividing the laser beam L into two beams by ejecting each incident laser beam L toward different positions from each other, are arranged in the shape of the array in the direction (main scanning direction) orthogonal to divided direction of the laser beam L (sub-scanning direction). The array refracting element 36 is positioned by the element moving motor 40 such that the divided direction of the laser beam L corresponds to the sub-scanning direction and the array refracting element 36 can be inserted into and removed from the position where a far field pattern is formed with the collimator lens 32. The array refracting element 36 is formed by using an optical glass in the first embodiment.

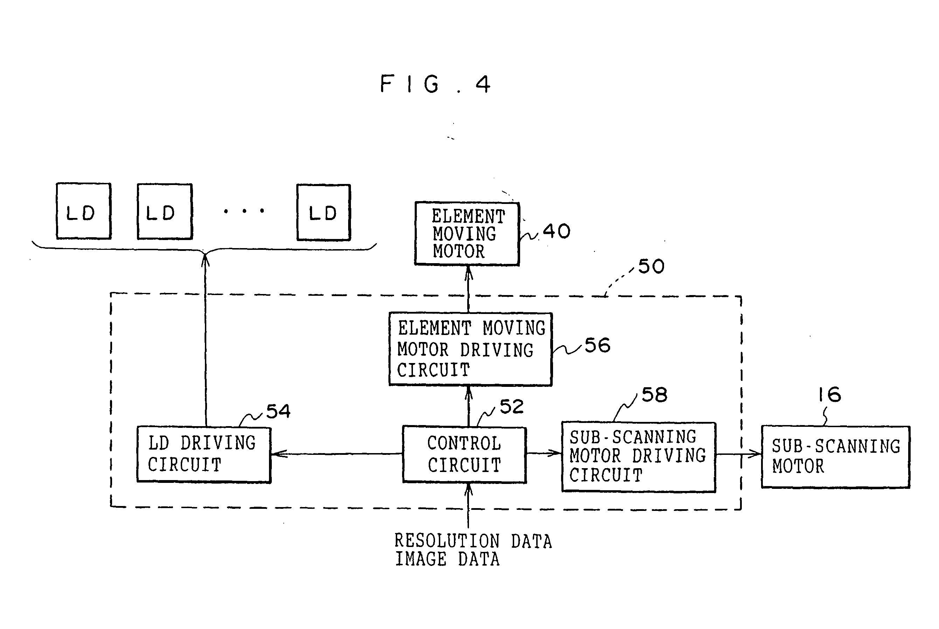

Referring to Fig. 4, a configuration of a control system of the laser recording apparatus 10A according to the embodiment will be described below. As shown in Fig. 4, the control system includes an LD driving circuit 54 which drives the laser diode according to the image data, an element moving motor driving circuit 56 which drives the element moving motor 40, a sub-scanning motor driving circuit 58 which drives the sub-scanning motor 16, and a control circuit 52 which controls the LD driving circuit 54, the element moving motor driving circuit 56, and the sub-scanning motor driving circuit 58. The image data showing the image to be recorded in the recording film F and the resolution data showing the resolution of the image recording are supplied to the control circuit 52.

The array refracting element 36 corresponds to the array refracting element of the invention, the laser diode LD corresponds to the light source of the invention, the collimator lens 32 and the condenser lens 38 correspond to the condensing optical system of the invention, the element moving motor 40 corresponds to the moving component of the invention, and the recording film F corresponds to the recording medium of the invention, respectively.

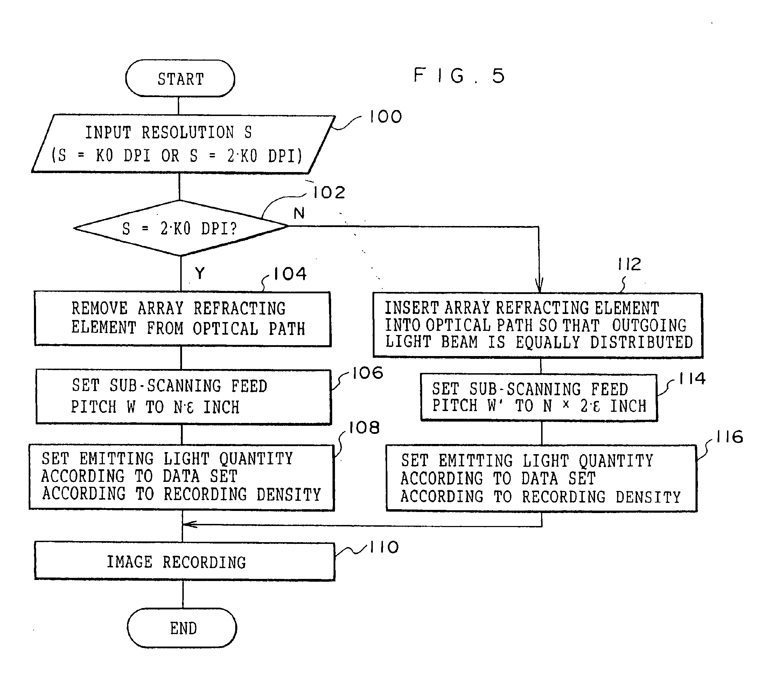

The operation of the laser recording apparatus 10A having the above-described configuration will be described below referring to the flow chart shown in Fig. 5. In this case, the description will be performed, assuming that a spacing of the beam spot is set to 2·ε and the shift quantity, on the recording film F, of the beam spot of the two laser beams divided by the array refracting element 36 is set to ε on the recording film F in the case where ε is the scanning line pitch of each laser beam L in the sub-scanning direction on the side of a higher resolution on the recording film F when the laser beam L is not divided, i.e. the array refracting element 36 is not placed on the optical path of the laser beam L.

At first an operator inputs resolution data showing a resolution S of an image to be recorded to the laser recording apparatus 10A (step 100). The resolution data and the image data of the image to be recorded are supplied to the control circuit 52, and the control circuit 52 supplies a signal adjusted on the basis of these data to the LD driving circuit 54, the element moving motor driving circuit 56, and the sub-scanning motor driving circuit 58. In the embodiment, the description is performed, assuming that the image can be recorded by using two kinds of resolutions of K0 (dpi) and 2·K0 (dpi) as the resolution S.

When the resolution inputted by the operator is 2·K0 (dpi) (in the case the determination is affirmative in the step 102), the element moving motor driving circuit 56 drives the element moving motor 40 and moves the array refracting element 36 such that the array refracting element is not positioned on the optical path of the laser beam L (step 104). In this case, the sub-scanning motor driving circuit 58 sets a feed pitch W of the exposure head 12 by the sub-scanning motor 16 in the sub-scanning direction as follows (step 106).

$$W = \frac{(N-1) \times 2 \cdot \varepsilon}{2} + \varepsilon = N \cdot \varepsilon$$

However, N is the number of laser diodes LD (seven laser diodes in the present embodiment).

That is, when the resolution is 2·K0 (dpi), the laser beam L is not divided in the sub-scanning direction by removing the array refracting element 36 from the optical path of the laser beam L. This enables the two times resolution to be realized, compared with the case of the division of the laser beam L.

When the movement of the array refracting element 36 and the setting of the feed pitch in the sub-scanning direction are finished, the LD driving circuit 54 controls the drive of each laser diode LD on the basis of the image data such that the emitting light quantity is obtained according to the data set to the recording density (step 108).

The laser beam L emitted from each laser diode LD is paralleled with the collimator lens 32, and condensed on the recording film F of the drum 14 through the condenser lens 38.

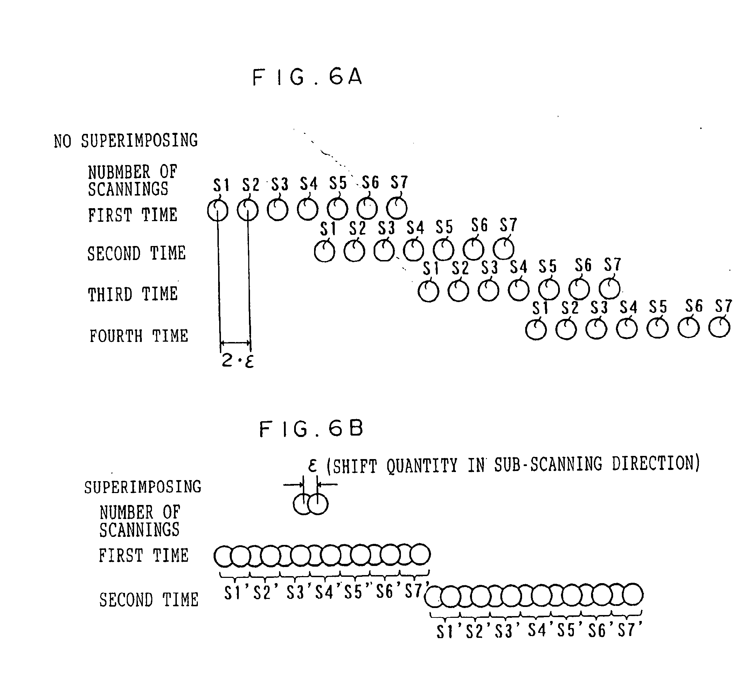

In this case, beam spots S1 to S7 (Fig. 6A) having the intensity distribution shown in Fig. 13A, respectively, are formed on the recording film F. As shown in Fig. 6A, in the beam spots S1 to S7, the two dimensional image having the resolution 2·K0 (dpi) is formed on the recording film F in such a manner that the exposure head 12 is moved by the feed pitch W in the sub-scanning direction and the drum 14 is rotated in the main scanning direction (step 110).

The case where the resolution is changed from 2·K0 (dpi) to K0 (dpi) (in the case the determination is negative in the step 102) will be described below. In this case, the element moving motor driving circuit 56 drives the element moving motor 40 and moves the array refracting element 36 such that the array refracting element is positioned on the optical path of the laser beam L (step 112). Also, the sub-scanning motor driving circuit 58 sets a feed pitch W' of the exposure head 12 by the sub-scanning motor 16 in the sub-scanning direction as follows

(step 114).

$$W' = N \times 2 \cdot \varepsilon$$

That is, when the resolution is K0 (dpi), the laser beam L is divided into the multiple laser beams (two beams in the present embodiment) in the sub-scanning direction by positioning the array refracting element 36 on the optical path of the laser beam L. This enables the half resolution to be realized, compared with the case where the laser beam L is not divided.

When the movement of the array refracting element 36 and the setting of the feed pitch in the sub-scanning direction are finished, the LD driving circuit 54 controls the drive of each laser diode LD on the basis of the image data such that the emitting light quantity is obtained according to the data set to the recording density (step 116).

The laser beam L emitted from each laser diode LD is paralleled with the collimator lens 32, supplied to the array refracting element 36, and divided into four beams in each laser beam L in the main scanning direction (beam sharing). Then, the four-divided laser beam is condensed on the recording film F of the drum 14 through the condenser lens 38 while each laser beam is divided into two beams in the sub-scanning direction.

When the array refracting element 36 is placed at the position where the laser beam L is paralleled on the optical axis of each laser beam L and near the position where the far field pattern is formed as shown in Fig. 7A, each laser beam L is temporarily divided into four beams with the array refracting element 36 as shown in Fig. 7B, and each laser beam L divided into four beams with the array refracting element 36 is condensed with the condenser lens 38 as shown in Fig. 7A. Accordingly, divided laser beams are superimposed in each two beams in the sub-scanning direction on the scanned surface, which allows the resultant state of the two divided beams.

At this point, since one condensing spot is formed with the condensing beams of the number of array pairs, when the outgoing side of the laser beam is viewed from the focal point with respect to the main scanning direction, the blurring of a laser beam becomes symmetrical in direction of the optical axis, and as a result, the image quality of the recording image can be improved in the laser recording apparatus 10A.

In this case, beam spots S1 to S7' (Fig. 6B), which have two intensity distributions shown in Fig. 13B, i.e. the intensity distribution in which each intensity distribution of the two divided laser beams is combined in the sub-scanning direction, are formed on the recording film F.

As shown in Fig. 6B, in the beam spots S1' to S7', the two dimensional image having the resolution K0 (dpi) is formed on the recording film F in such a manner that the exposure head 12 is fed by the feed pitch W' in the sub-scanning direction and the drum 14 is rotated in the main scanning direction (step 110) .

When the resolution of the recording image is changed from 2·K0 (dpi) to K0 (dpi), the beam spots S1 to S7 can be easily enlarged to the beam spots S1' to S7' by only inserting the array refracting element 36 onto the optical path of the laser beam L, and the high-speed image recording can be performed because the sub-scanning speed is increased.

In the same way, the resolution of the recording image can be changed from K0 (dpi) to 2·K0 (dpi).

The processing of the step 100 corresponds to the inputting component of the invention.

As described above in detail, in the array refracting element 36 according to the first embodiment, each two pairs of refracting members a1 and b1 having the unit surface shape which divides one laser beam into two beams by ejecting each of the one incident laser beams toward the different positions are configured to be arranged in pair units in the shape of the array in the direction orthogonal to the divided direction of the laser beam, so that the image quality of the recording image can be improved at low cost when the array refracting element 36 is used in the laser recording apparatus 10A.

In the array refracting element 36 according to the first embodiment, the shape which divides the one incident laser beam into light beams which have different angular orientation from each other to eject the laser beam is applied to the unit surface shape of the invention, so that the array refracting element 36 can correspond to the region where the laser beam to be divided is substantially paralleled.

Further, since the array refracting element 36 according to the first embodiment is made of the optical glass, the cost of the array refracting element 36 can be significantly reduced, compared with the case where the array refracting element 36 is made of the uniaxial crystal.

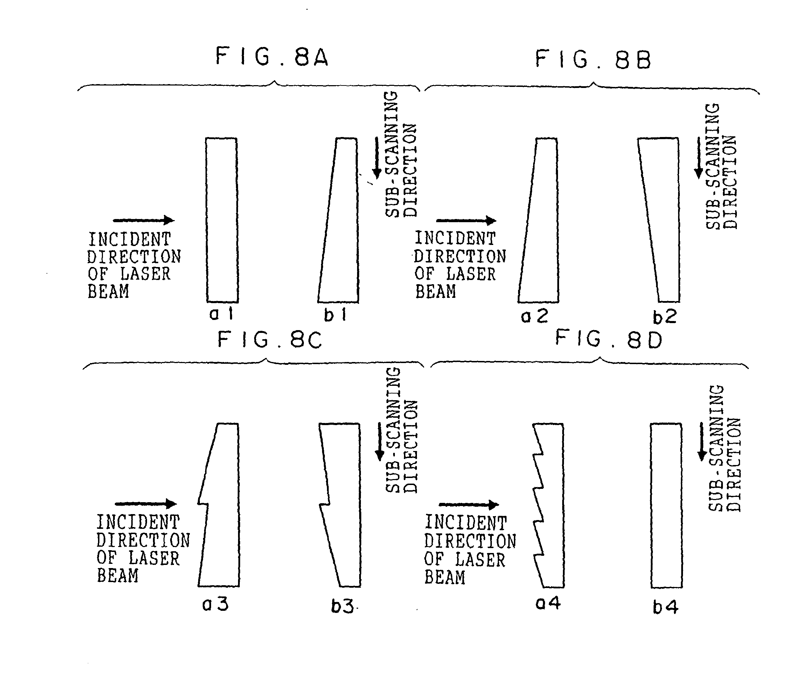

As shown in Fig. 8A, the case, in which the refracting member a1 having a rectangular shape in plan view and the refracting member b1 having a linear slope from one end of the sub-scanning direction to the other end on the incident side of the laser beam are configured so as to be arranged in pair units in the shape of the array in the direction (main direction) orthogonal to the divided direction (sub-scanning direction) of the laser beam, has been described in the embodiment, but the invention is not limited to the embodiment. Any two pairs of refracting members having the unit surface shape which divides one laser beam into two beams by ejecting each of one incident laser beam toward the different positions which are configured so as to be arranged in pair units in the shape of the array in the direction (main scanning direction) orthogonal to the divided direction (sub-scanning direction) of the laser beam can be applied to the array refracting element 36.

Fig. 8B to 8D show examples (plan view) of the two refracting members defining the shape of the array refracting element or array diffracting element, which can be employed in the same way as the array refracting element 36 shown in the embodiment. The array refracting element shown in Fig. 8B is an example which has a refracting member a2 having the linear slope from one end of the sub-scanning direction to the other end on the incident side of the laser beam and a refracting member b2 having the linear slope from the other end of the sub-scanning direction to one end (slope is the reverse of that of the refracting member a2) on the incident side of the laser beam, so that the array refracting element of the invention can be obtained in such a manner that these refracting members are configured so as to be arranged in pair units in the shape of the array in the main scanning direction. According to the array refracting element, the incident laser beam can be divided in the subject direction for the optical axis of the laser beam and ejected.

The array refracting element shown in Fig. 8C is an example which has a refracting member a3 having the multiple linear slopes from one end of the sub-scanning direction to the other end on the incident side of the laser beam and a refracting member b3 having the multiple linear slopes from the other end of the sub-scanning direction to one end (slope is the reverse of that of the refracting member a3) on the incident side of the laser beam, the array refracting element of the invention can be also obtained in such a manner that these refracting members are configured so as to be arranged in pair units in the shape of the array in the main scanning direction. According to the array refracting element, similar to the array refracting element shown in Fig. 8B, the incident laser beam can be divided in the subject direction for the optical axis of the laser beam and ejected.

Further, the array refracting element shown in Fig. 8D is an example which has a diffracting member a4 having the many linear slopes from the other end of the sub-scanning direction to the one end on the incident side of the laser beam and a refracting member b4 having the rectangular shape in plan view, the array diffracting element of the invention can be also obtained in such a manner that these diffracting members and refracting members are configured so as to be arranged in pair units in the shape of the array in the main scanning direction. However, a height of each step is set to an integral multiple of $\lambda/(n-1)$ when a refractive index of the diffracting member is n, the refractive index of air is 1, and a wavelength of the light is $\lambda$. According to the array diffracting element, the incident laser beam can be divided in the direction parallel to the optical axis of the laser beam and the direction gradually separating from the optical axis to the sub-scanning direction and ejected.

Here, we have explained a case in which the array diffracting element is structured to use both the diffracting member and the refracting member, however, the array diffracting element can be structured to use only diffracting members by making refracting member b4 into a diffracting member, and can also have a structure in which diffracting member a4 is made into a refracting member and refracting member b4 is made into a diffracting member.

Although the cases, in which all the slopes of the refracting member or diffracting member are provided on the incident side of the laser beam, are shown in the examples shown in Figs. 8A to 8D, the same slopes can be also provided on the ejecting side of the laser beam. The same effect as the embodiment can be also obtained in these array refracting elements or diffracting element.

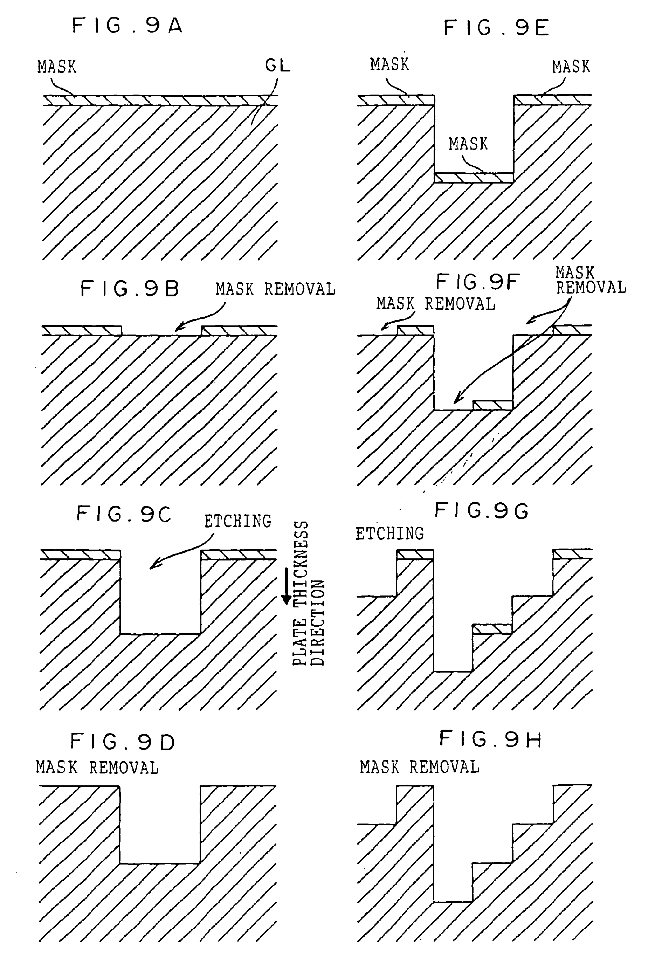

A concrete example of a method of manufacturing the array refracting element or array diffracting element according to the invention will be described below. A method in which the slope shown in Figs. 8A to 8D is formed by cutting the plate-shaped optical glass, a method in which the slope is formed by adopting the technique called an binary optics to the plate-shaped optical glass, or the like can be cited as an example of the method of manufacturing the array refracting element or array diffracting element. The array diffracting element manufacturing method adopting the binary optics will be described here referring to Figs. 9A to 9H. Figs. 9A to 9H show the case manufacturing the array diffracting element which is configured to arrange, e.g. the diffracting members having the shape shown in Fig. 8D in the shape of the array in the direction orthogonal to the divided direction of the laser beam.

As shown in Fig. 9A, at first one of surfaces (hereinafter referred to as "processing surface") of a plate-shaped glass GL having a predetermined thickness is covered with a mask. As shown in Fig. 9B, part of the mask is irradiated with the light, and the region of the mask which has been irradiated with the light is removed. As shown in Fig. 9C, the region is removed in the plate thickness direction to a predetermined depth by etching to form a concave portion, and then, as shown in Fig. 9D, the mask remaining over the processing surface of the plate-shaped glass GL is completely removed.

As shown in Fig. 9E, the processing surface of the plate-shaped glass GL and a bottom surface of a concave portion, which is formed by the etching, are masked. As shown in Fig. 9F, the regions form the same side end portions of each mask (the left side end in the case in Figs. 9A to 9H) to the central position of the mask are irradiated with the light, and the regions which have been irradiated with the light are removed. As shown in Fig. 9G, the regions are removed in the plate thickness direction to the predetermined depth by the etching. Then, as shown in Fig. 9H, the masks remaining over the processing surface of the plate-shaped glass GL are completely removed.

In the processing surface of the plate-shaped glass GL, the concave portion having the step shape in the sectional view can be formed by the above-described process. A slope can be formed on the processing surface by repeatedly carrying out the process shown in Figs. 9E to 9H.

The number of steps of the step-shaped concave portion, which is formed the binary optics, is called a level (four levels in the state shown in Fig. 9H). Theoretically, a proportion of the light diffracted in the desired/direction by the slope formed in the concave portion is about 95% in the case of the 8-level slope, and about 98.7% in the case of the 16-level slope. Accordingly, even in the case of the processing of about 16-level slope, it is expected that the array diffracting element, which sufficiently endures the practical use, can be manufactured.

Though the case where the array refracting element is integrally formed by using the optical glass has been described in the present embodiment, the invention is not limited to the same. For example, it is needless to say that the array refracting element or the array diffracting element can be configured by arranging the refracting members a1 to a3, diffracting member a4 and refracting members b1 to b4 having the shapes shown in Figs. 8A to 8D in pair unit in the shape of the array and bonding the refracting members a1 to a3 and array diffracting element a4. In this case, the same effect as the present embodiment can be also obtained.

[Second Embodiment]

The mode of the case, in which the array refracting element of the invention is provided in the region where the light beams are substantially paralleled and the incident light beam is divided into beams having the different angles to be ejected, has been described in the first embodiment. However, a mode of the case, in which the array refracting element is provided in the region to which the light beam converges and the incident light beam is divided to be ejected such that the optical axis of the outgoing light beam is paralleled to the optical axis of the incident light beam, will be described in a second embodiment of the invention.

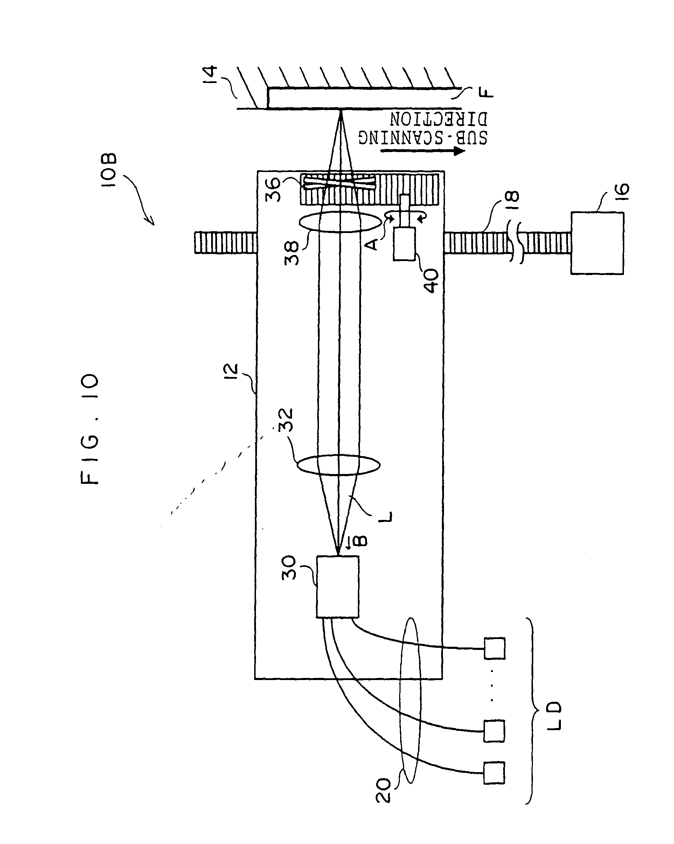

The configuration of a laser recording apparatus 10B according to the second embodiment will be described referring to Fig. 10. Components in Fig. 10 which are the same as those of the laser recording apparatus 10A shown in Fig. 1 are indicated by the same reference numerals, and description thereof is omitted.

As shown in Fig. 10, the laser recording apparatus 10B according to the second embodiment differs from the laser recording apparatus 10A according to the first embodiment only in that an array refracting element 36' is used instead of the array refracting element 36 and the array refracting element 36' is provided in the region to which the laser beam L converges between the condenser lens 38 and the recording film F.

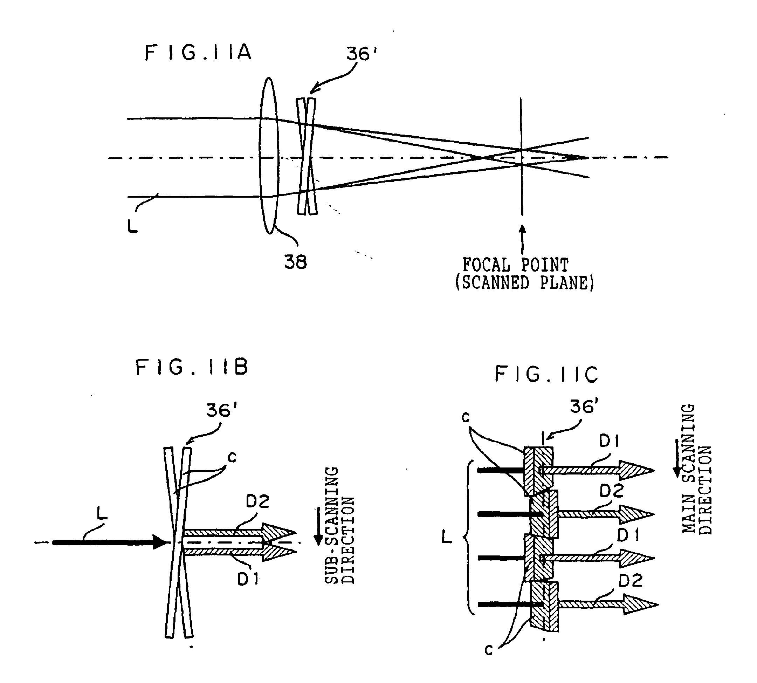

As shown in Figs. 11B and 11C, the array refracting element 36' according to the second embodiment is configured such that two pairs of two refracting members c (plate-shaped optical glass in the embodiment) having a unit surface shape dividing the laser beam L into two beams by ejecting each of the incident laser beam toward the different positions from each other are arranged in pair units in the shape of the array in the direction (main scanning direction) orthogonal to the divided direction (sub-scanning direction) of the laser beam L. The array refracting element 36' is positioned by the element moving motor 40 such that the divided direction of the laser beam L corresponds to the sub-scanning direction.

As shown in Figs. 11B and 11C, the array refracting element 36' according to the second embodiment is configured to bond four pieces of the optical glass having a predetermined thickness at the central position of each predetermined direction by using the optical bonding agent such that the four pieces of the optical glass are slanted at a predetermined angle with alternating one direction relative to the sub-scanning direction and the averse direction to the one direction. Balsam, epoxy adhesive, silicon adhesive, and the like can be used as the optical bonding agent. For example, the predetermined angle is 6°, assuming that the beam spot pitch is 11.6 $\mu$m on the scanned surface of the divided laser beam L and the plate thickness of the optical glass is 0.15 mm.

When the resolution is set to K0 (dpi), the laser beam L emitted from each laser diode LD is made paralleled by the collimator lens 32, and supplied to the condenser lens 38 to be condensed as shown in Fig. 11A.

The laser beam L condensed by the condenser lens 38 is supplied to the array refracting element 36', and divided into four beams (beam sharing) in the main scanning direction as shown in Fig. 11C. Then, the four-divided beams are ejected from each of the pairs of regions corresponding to the unit surface shape of the array refracting element 36' such that the optical axes of two divided laser beams D1 and D2 are parallel to the optical axis of the laser beam L. The four-divided laser beams are superimposed in each two beams in the sub-scanning direction on the scanned surface of the recording film F provided on the drum 14, consequently, each laser beam L is condensed while the laser beam L is divided into two beams in the sub-scanning direction.

At this point, since one condensing spot is formed by the condensing beams of the number of array pairs, when the outgoing side of the laser beam is viewed from the focal point and when the incident side of the laser beam is viewed from the focal point with respect to the main scanning direction, the blurring of each laser beam becomes symmetrical in the direction of the optical axis. As a result, the image quality of the recording. image can be improved in the laser recording apparatus 10B.

In this case, beam spots S1' to S7' (Fig. 6B), which have two intensity distributions shown in Fig. 13B, i.e. the intensity distribution in which each intensity distribution of the two divided laser beams is combined in the sub-scanning direction, are formed on the recording film F.

As shown in Fig. 6B, in the beam spots S1' to S7', the two dimensional image having the resolution K0 (dpi) is formed on the recording film F in such a manner that the exposure head 12 is fed by the feed pitch W' in the sub-scanning direction and the drum 14 is rotated in the main scanning direction.

On the other hand, when the image having the resolution of 2·K0 (dpi) is formed, the array refracting element 36' may be moved so as not to be placed on the optical path of the laser beam L and controlled so as to obtain the beam spots S1 to S7 shown in Fig. 6A.

As described above in detail, in the array refracting element 36' according to the second embodiment, the two refracting members c having the unit surface shape which divides one incident laser beam into two beams by ejecting each of the one laser beams toward the different positions are configured to be arranged in pair units in the shape of the array in the direction orthogonal to the divided direction of the laser beam, so that the image quality of the recording image can be improved at low cost when the array refracting element 36' is used in the laser recording apparatus 10B.

In the array refracting element 36' according to the second embodiment, the shape, which divides the one incident laser beam such that the optical axis of the incident laser beam is parallel to the optical axis of the divided laser beam to eject the laser beam, is applied to the unit surface shape, so that the array refracting element 36' can correspond to the region where the laser beam to be divided diverges or the region where the laser beam to be divided converges.

Further, since the array refracting elements 36 and 36' according to each of the above-described embodiments are configured such that the refracting member has the shape in which the refracting members are arranged in the shape of the array in the main scanning direction, the image quality of the image to be formed can be improved and the laser beam can be efficiently utilized, compared with the case where the refracting members are arranged in the sub-scanning direction.

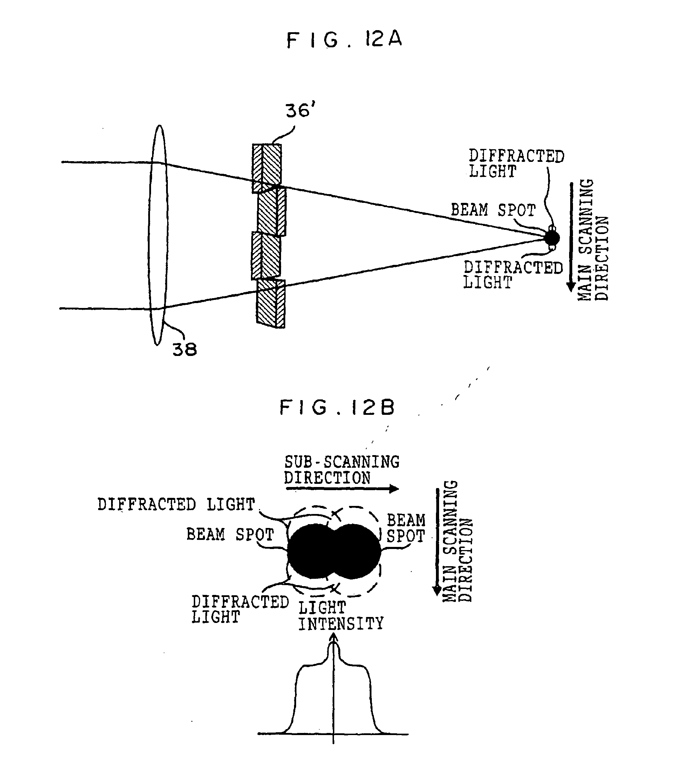

Namely, by forming the refracting member or the diffracting member are formed in the array shape, diffracted light is generated at joining portions of each member. For example, in the array refracting element pertaining to the embodiment shown in Fig. 12A, because the refracting member is structured so as to be arranged in the array shape, diffracted light at the joining member theoretically has a light intensity of first order diffracted light of about 40% with respect to a light intensity of zero order light. In this case, as shown in Fig. 12B, by the broad area direction taking at least the main scanning direction, a difference between the spot position of light diffracted by one order in the main scanning direction with respect to the spot diameter of the zero order main scanning direction at the scanned surface, can be made relatively small. Therefore, this refracted light can be used for image forming in the main scanning direction and the laser beam can be efficiently used. Being able to use this diffracted light is extremely useful.

Moreover, light intensity distribution at the scanned surface in this case, for example, with respect to the figure shown in the lower portion of Fig. 12B, the diffracted light in the case in which the array refracting element is formed by aligning refracting members in the sub scanning direction, cannot maintain a sharp edge portion of the light intensity distribution ends in the sub scanning direction because the diffracted light exposes in a state of being shifted in the sub scanning direction from the beam spot position. In contrast to this, by forming the array refracting element so as to be arranged in the array shape in the main scanning direction, an image having sharp lines can be formed, change of line width in this image rarely occurs, and as a result, image quality can be improved.

In the laser recording apparatuses 10A and 10B according to each of the embodiments, since the array refracting element is placed between the fiber array portion 30 and the recording film F such that the array direction of the laser beam is parallel to the broad area direction of the laser beam, the blurring of the laser beam can be symmetric in the direction of the optical axis, and as a result, the image quality of the recording image can be improved. Since the array refracting element can be formed at low cost compared with the case where the uniaxial crystal is used, the apparatus can be configured at low cost.

In the laser recording apparatuses 10A and 10B according to each of the embodiments, since the array refracting element is placed at the position where the far field pattern of the laser beam is formed, the array refracting element can equally work for the entire laser beams L emitted from each laser diode LD.

In the laser recording apparatuses 10A and 10B according to each of the embodiments, the resolution information (corresponding to "resolution data" in each of the embodiments) showing the resolution of the image formed on the recording film F by the scanning exposure is inputted. When the resolution shown by the resolution information is the predetermined first resolution (2.K0 (dpi) in each of the embodiments), the array refracting element is removed from the optical axis of the laser beam emitted from the laser diode LD, and when the resolution shown by the resolution information is the second resolution (K0 (dpi) in each of the embodiments) which is lower than the first resolution, the array refracting element is moved so as to be placed on the optical axis. Therefore, the resolution can be easily changed only by inputting the resolution information during recording of the image in the recording film F.

Since the laser recording apparatuses 10A and 10B according to each of the embodiments are configured such that the multiple laser diodes LD are arranged along the direction of the laser beam L divided by the array refracting element and the laser beam L emitted from each laser diode LD is divided to be guided to the recording film F, the image can be recorded at high speed.

Although the case, in which the array refracting element 36' is provided at the region where the laser beam is condensed, has been described in the second embodiment, the invention is not limited to this case. For example, the array refracting element 36' can be provided at the region where the laser beam diverges, i.e. between the fiber array portion 30 and the collimator lens 32. In this case, the same effect as that of the second embodiment can be obtained.

Though the case, in which the invention is applied to the laser recording apparatuses 10A and 10B which perform the multi-beam scanning, has been described in each of the embodiments, the invention is not limited to the embodiments. For example, the invention can be applied to the laser recording apparatus which performs the single beam scanning, in which the light source is formed with one laser diode. In this case, the same effect as that of each of the embodiments can be obtained.

## Claims

1. An exposure apparatus for forming an image on a recording medium (F) by scanning exposure in which the recording medium (F) is moved in relation to a light beam both in a main-scanning direction and a sub scanning direction, the apparatus comprising:

   a light source (LD) for ejecting the light beam emitted in a broad area for at least said main-scanning direction;
   a condensing optical system (32, 38) for condensing the light beam emitted from the light source (LD) on the recording medium (F); and
   a light dividing element array (36, 36') which is configured by arranging in an arranging direction parallel to the main-scanning direction at least two pair units, wherein each pair unit is configured by arranging a first member and a second member in the arranging direction, and which is disposed between the light source (LD) and the recording medium (F),

   wherein the first member is either one of a refracting or diffracting member and the second member is either one of a refracting or diffracting member, wherein
   the surface shape of the first member and the surface shape of the second member are adapted to eject the light beam entered into the element array toward different positions respectively and thereby the light beam is divided in the sub scanning direction orthogonal to the main scanning direction, and wherein there are provided:

   an inputting component for inputting resolution information showing resolution of an image formed on the recording medium by the scanning exposure; and
   a moving component by which the light dividing element array (36, 36') is displaced from the optical axis of the light beam emitted from the light source when the resolution shown by the resolution information is a predetermined first resolution, and the element array is moved so as to be placed on the optical axis when the resolution shown by the resolution information is a second resolution which is lower than the first resolution.

2. The apparatus of claim 1, wherein the unit surface shape is a shape for dividing the one incident light beam into different angular orientations and ejecting the divided light beams.

3. The apparatus of claim 1, wherein the surface shape of the element array is a shape for dividing and ejecting the one incident light beam such that an optical axis of the ejected light beams is parallel to an optical axis of the light.

4. The apparatus of any one of claims 1 to 3, wherein the element array is configured using optical glass.

5. The apparatus of any one of claims 1 to 4. wherein the first member is a first refracting member having a rectangular shape in plane view, and the second member is a second refracting member having, at one of a light beam incident side or a light beam ejecting side, a flat surface sloped from one end to another end in the direction of the division of the light beam.

6. The apparatus of any one of claims 1 to 4, wherein the first refracting member has, at one of a light beam incident side or a light beam ejecting side, a surface rectilinearly sloped from one end to another end in the direction of the redirection of the light beams, and the second refracting member has, at one of the light beam incident side or the light beam ejecting side, a surface rectilinearly sloped from the other end to the one end in the direction of the redirection of the light beams.

7. The apparatus of any one of claims 1 to 4, wherein the first refracting member has at one of a light beam incident side or a light beam ejecting side, at least two surfaces rectilinearly sloped from one end to another end in the direction of the redirection of the light beams, and the second refracting member has, at one of the light beam incident side or the light beam ejecting side, at least two surfaces rectilinearly sloped from the other end to the one end in the direction of the redirection of the light beams.

8. The apparatus of any one of claims 1 to 4, wherein the first refracting member has, at one of a light beam incident side or a light beam ejecting side, at least two surfaces rectilinearly sloped from one end to another end in the direction of the division of the light beams, and the second refracting member has a rectangular shape in plan view.

9. The apparatus of any one of claims 1 to 8, wherein the element array is disposed at a position at which a far field pattern of the light beams emitted from the light source is formed.

**Patentansprüche**

1. Belichtungsvorrichtung zum Erzeugen eines Bilds auf einem Aufzeichnungsmedium (F) durch Abtastbelichtung, bei der das Aufzeichnungsmedium (F) gegenüber einem Lichtstrahl sowohl in einer Hauptabtastrichtung als auch in einer Nebenabtastrichtung bewegt wird, umfassend:

eine Lichtquelle (LD) zum Ausstoßen eines Lichtstrahls, der in einem breiten Bereich für zumindest die Hauptabtastrichtung emittiert wird; eine Kondensoroptik (32, 38) zum Bündeln des von der Lichtquelle (LD) emittierten Lichtstrahls auf dem Aufzeichnungsmedium (F); und ein Lichtaufteilungselementarray (36, 36'), konfiguriert durch Anordnen in einer Anordnungsrichtung parallel zur Hauptabtastrichtung von mindestens zwei Paar Einheiten, von denen jedes Einheitenpaar konfiguriert ist durch Anordnen eines ersten Glieds und eines zweiten Glieds in der Anordnungsrichtung, und das zwischen der Lichtquelle (LD) und dem Aufzeichnungsmedium (F) gelegen ist,

wobei das erste Glied entweder ein brechendes oder ein beugendes Glied ist, und das zweite Glied entweder ein brechendes oder ein beugendes Glied ist, wobei die Oberflächenform des ersten Glieds und die Oberflächenform des zweiten Glieds dazu ausgebildet sind, den in das Elementen-Array eintretenden Lichtstrahl zu unterschiedlichen Stellen hin auszustossen, um dadurch den Lichtstrahl in der Nebenabtastrichtung orthogonal zur Hauptabtastrichtung zu teilen, wobei vorgesehen sind:

eine Eingabekomponente zum Eingeben von Auflösungsinformation, die die Auflösung eines auf dem Aufzeichnungsmedium durch die Abtastbelichtung erzeugten Bilds angibt; und eine Bewegungskomponente, durch die das Lichtunterteilungselementarray (36, 36') gegenüber der optischen Achse des von der Lichtquelle emittierten Lichtstrahls versetzt wird, wenn die durch die Auflösungsinformation dargestellte Auflösung einer vorbestimmten erste Auflösung entspricht, und das Elementen-Array derart bewegt wird, dass es auf der optischen Achse platziert wird, wenn die durch die Auflösungsinformation dargestellte Auflösung eine zweite Auflösung ist, die geringer ist als die erste Auflösung.

**2.** Vorrichtung nach Anspruch 1, bei der die Einheiten-Oberflächenform eine Form ist, mit der der eine auftreffende Lichtstrahl geteilt wird in unterschiedliche Winkelorientierungen, wobei die aufgeteilten Lichtstrahlen ausgestoßen werden.

**3.** Vorrichtung nach Anspruch 1, bei der die Oberflächenform des Elementen-Arrays eine Form ist zum Teilen und Ausstoßen des einen auftreffenden Lichtstrahls derart, dass eine optische Achse der ausgestoßenen Lichtstrahlen parallel zu einer optischen Achse des Lichts verläuft.

**4.** Vorrichtung nach einem der Ansprüche 1 bis 3, bei der das Elementen-Array unter Einsatz von optischem Glas konfiguriert ist.

**5.** Vorrichtung nach einem der Ansprüche 1 bis 4, bei dem das erste Glied ein erstes brechendes Teil mit einer im Grundriss rechteckigen Form ist, und das zweite Glied ein zweites brechendes Teil ist, welches an einer von der Lichtstrahl-Eintrittsseite oder einer Lichtstrahl-Austrittsseite eine Flachseite bildet, die abgeschrägt von einem Ende zum anderen Ende in Teilungsrichtung des Lichtstrahls verläuft.

**6.** Vorrichtung nach einem der Ansprüche 1 bis 4, bei der das erste brechende Glied an einer von der Lichtstrahl-Eintrittsseite und der Lichtstrahl-Austrittsseite eine Fläche aufweist, die von einem zum anderen Ende in einer Richtung der Umlenkung der Lichtstrahlen geradlinig abgeschrägt ist, und das zweite brechende Glied an einer von der Lichtstrahl-Eintrittsseite und der Lichtstrahl-Austrittsseite eine Fläche besitzt, die von einem Ende zum anderen Ende in Richtung der Lichtstrahl-Umlenkung geradlinig schräg verläuft.

**7.** Vorrichtung nach einem der Ansprüche 1 bis 4, bei der das erste brechende Glied an einer von der Lichtstrahl-Eintrittsseite und der Lichtstrahl-Austrittsseite mindestens zwei Flächen aufweist, die von einem Ende zum anderen ende in Richtung der Umlenkung der Lichtstrahlen geradlinig abgeschrägt sind, und das zweite brechende Glied an einer von der Lichtstrahl-Eintrittsseite und der Lichtstrahl-Austrittsseite mindestens zwei Flächen aufweist, die von dem anderen Ende zu dem einen Ende in der Richtung der Lichtstrahl-Umlenkung geradlinig abgeschrägt verlaufen.

**8.** Vorrichtung nach einem der Ansprüche 1 bis 4, bei der das erste brechende Glied an einer von der Lichtstrahl-Eintrittsseite und der Lichtstrahl-Austrittsseite mindestens zwei Oberflächen besitzt, die von einem Ende zum anderen Ende in der Richtung der Lichtstrahl-Teilung geradlinig abgeschrägt verlaufen, und das zweite brechende Glied eine im Grundriss rechteckige Form aufweist.

**9.** Vorrichtung nach einem der Ansprüche 1 bis 8, bei der das Elementen-Array an einer Stelle angeordnet ist, an der ein Fernfeld-Muster der von der Lichtquelle emittierten Lichtstrahlen gebildet ist.

**Revendications**

**1.** Appareil d'exposition pour former une image sur un support d'enregistrement (F) par une exposition par balayage au cours de laquelle le support d'enregistrement (F) est amené à se déplacer en rapport avec un faisceau lumineux, tant dans une direction de balayage principal que dans une direction de balayage secondaire, l'appareil comprenant :

une source de lumière (LD) adapté pour éjecter le faisceau lumineux émis sur une surface étendue pour au moins ladite direction de balayage principal ;
un système optique de condensation (32, 38) pour condenser le faisceau lumineux émis à partir de la source de lumière (LD) sur le support d'enregistrement (F) ; et
un ensemble d'éléments de division de la lumière (36, 36') qui est configuré en agençant - dans une direction d'agencement parallèle à la direction de balayage principal - au moins deux unités appairées, dans lequel chaque unité appairée est configurée en agençant un premier élément et un second élément dans la direction d'agencement, et qui est disposé entre la source de lumière (LD) et le support d'enregistrement (F),

dans lequel le premier élément est l'un - soit d'un élément réfractif ou d'un élément diffractif -, et le second élément est l'un - soit d'un élément réfractif ou d'un élément diffractif,
dans lequel :

la forme de la surface du premier élément et la forme de la surface du second élément sont adaptées pour éjecter le faisceau lumineux entré dans l'ensemble d'éléments vers des positions respectivement différentes, moyennant quoi le faisceau lumineux est divisé dans la direction de balayage secondaire orthogonalement par rapport à la direction de balayage principal, et dans lequel se trouvent :

un composant d'entrée qui sert à entrer des informations de résolution indiquant la résolution d'une image formée sur le support d'enregistrement par l'exposition par balayage ; et
un composant mobile par lequel l'ensemble d'éléments de division de la lumière (36, 36') est amené à se déplacer par rapport à l'axe optique du faisceau lumineux émis à partir de la source de lumière quand la résolution indiquée par les informations de résolution est une première résolution prédéterminée, et l'ensemble d'éléments est amené à se déplacer de façon à venir sur l'axe optique quand la résolution indiquée par les informations de résolution est une seconde résolution qui est inférieure à la première résolution.

2. Appareil selon la revendication 1, dans lequel la forme de la surface de l'élément est une forme adaptée pour diviser le faisceau lumineux unique incident en diverses orientations angulaires et pour éjecter les faisceaux lumineux divisés.

3. Appareil selon la revendication 1, dans lequel la forme de la surface de l'ensemble d'éléments est une forme adaptée pour diviser et pour éjecter le faisceau lumineux unique incident de façon à ce qu'un axe optique des faisceaux lumineux éjectés soit parallèle à un axe optique de la lumière.

4. Appareil selon l'une quelconque des revendications 1 à 3, dans lequel l'ensemble d'éléments est configuré en utilisant un verre optique.

5. Appareil selon l'une quelconque des revendications 1 à 4, dans lequel le premier élément est un premier élément de réfraction qui a une forme rectangulaire dans une vue en plan, et le second élément est un second élément de réfraction qui a - au niveau d'un côté incident du faisceau lumineux ou bien sur un côté d'éjection du faisceau lumineux - une surface plate qui est inclinée d'une extrémité vers l'autre dans la direction de la division du faisceau lumineux.

6. Appareil selon l'une quelconque des revendications 1 à 4, dans lequel le premier élément de réfraction a - au niveau d'un côté incident du faisceau lumineux ou bien sur un côté d'éjection du faisceau lumineux - une surface rectiligne qui est inclinée d'une extrémité vers l'autre dans la direction de la redirection des faisceaux lumineux, et le second élément de réfraction a - au niveau d'un côté incident du faisceau lumineux ou bien sur un côté d'éjection du faisceau lumineux - une surface rectiligne qui est inclinée d'une extrémité vers l'autre dans la direction de la redirection des faisceaux lumineux.

7. Appareil selon l'une quelconque des revendications 1 à 4, dans lequel le premier élément de réfraction a - au niveau d'un côté incident du faisceau lumineux ou bien sur un côté d'éjection du faisceau lumineux - au moins deux surfaces rectilignes qui sont inclinées d'une extrémité vers l'autre dans la direction de la redirection des faisceaux lumineux, et le second élément de réfraction a - au niveau d'un côté incident du faisceau lumineux ou bien sur un côté d'éjection du faisceau lumineux - au moins deux surfaces rectilignes qui sont inclinées d'une extrémité vers l'autre dans la direction de la redirection des faisceaux lumineux.

8. Appareil selon l'une quelconque des revendications 1 à 4, dans lequel le premier élément de réfraction a - au niveau d'un côté incident du faisceau lumineux ou bien sur un côté d'éjection du faisceau lumineux - au moins deux surfaces rectilignes qui sont inclinées d'une extrémité vers l'autre dans la direction de la division des faisceaux lumineux, et le second élément de réfraction a une forme rectangulaire dans une vue en plan.

9. Appareil selon l'une quelconque des revendications 1 à 8, dans lequel l'ensemble d'éléments est placé dans une position au niveau de laquelle un motif de champ éloigné des faisceaux lumineux émis à partir de la source de lumière est formé.

F I G . 1

SUB-SCANNING
DIRECTION

FIG. 2

20

30

30A

SUB-SCANNING
DIRECTION

FIG. 3

36

a1

L

b1

SUB-SCANNING
DIRECTION

EP 1 376 194 B1

FIG. 4

SUB-SCANNING MOTOR — 16

ELEMENT MOVING MOTOR — 40

LD   LD  ...  LD

50

ELEMENT MOVING MOTOR DRIVING CIRCUIT — 56

SUB-SCANNING MOTOR DRIVING CIRCUIT — 58

CONTROL CIRCUIT — 52

LD DRIVING CIRCUIT — 54

RESOLUTION DATA
IMAGE DATA

## F I G . 5

START

INPUT RESOLUTION S
(S = K0 DPI OR S = 2·K0 DPI) — 100

S = 2·K0 DPI? — 102

Y — 104 / N

REMOVE ARRAY REFRACTING
ELEMENT FROM OPTICAL PATH — 104

SET SUB-SCANNING FEED
PITCH W TO N·ε INCH — 106

SET EMITTING LIGHT QUANTITY
ACCORDING TO DATA SET
ACCORDING TO RECORDING DENSITY — 108

INSERT ARRAY REFRACTING ELEMENT
INTO OPTICAL PATH SO THAT OUTGOING
LIGHT BEAM IS EQUALLY DISTRIBUTED — 112

SET SUB-SCANNING FEED
PITCH W' TO N × 2·ε INCH — 114

SET EMITTING LIGHT QUANTITY
ACCORDING TO DATA SET
ACCORDING TO RECORDING DENSITY — 116

IMAGE RECORDING — 110

END

# FIG. 6A

NO SUPERIMPOSING

NUBMBER OF SCANNINGS

FIRST TIME

SECOND TIME

THIRD TIME

FOURTH TIME

$2 \cdot \varepsilon$

S1 S2 S3 S4 S5 S6 S7

# FIG. 6B

$\varepsilon$ (SHIFT QUANTITY IN SUB-SCANNING DIRECTION)

SUPERIMPOSING

NUMBER OF SCANNINGS

FIRST TIME

SECOND TIME

S1' S2' S3' S4' S5' S6' S7'

S1' S2' S3' S4' S5' S6' S7'

EP 1 376 194 B1

# F I G . 7A

FOCAL POINT
(SCANNED PLANE)

# F I G . 7B

SUB-SCANNING
DIRECTION

MAIN SCANNING
DIRECTION

EP 1 376 194 B1

FIG.8A

FIG.8B

FIG.8C

FIG.8D

21

FIG.9A

MASK                    GL

FIG.9E

MASK                    MASK

MASK

FIG.9B    MASK REMOVAL

FIG.9F                MASK REMOVAL

MASK REMOVAL

FIG.9C    ETCHING

PLATE THICKNESS DIRECTION

FIG.9G

ETCHING

FIG.9D

MASK REMOVAL

FIG.9H

MASK REMOVAL

FIG. 10

EP 1 376 194 B1

FIG.11A

36'

FOCAL POINT
(SCANNED PLANE)

38

L

FIG.11B

36'

c

D2 D1

SUB-SCANNING
DIRECTION

L

FIG.11C

36'

c

D1 D2 D1 D2

c

L

MAIN SCANNING
DIRECTION

24

# F I G . 12A

# F I G . 12B

FIG.13A

INTENSITY

SUB-SCANNING
DIRECTION

FIG.13B

INTENSITY

SUB-SCANNING
DIRECTION

F I G . 14
PRIOR ART

CONDENSER LENS

LASER BEAM

FRONTWARD ← → BACKWARD
SHIFT           SHIFT

LASER BEAM

DEVIATION PRISM

FOCAL POINT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000284205 A, Fuji Photo Film Co. Ltd

- JP 2000284206 A

**Non-patent literature cited in the description**

- *PATENT ABSTRACTS OF JAPAN,* 05 February 2001, vol. 2000, 13